# EUROPEAN PATENT APPLICATION

(11) **EP 2 916 421 A1**
(43) Date of publication of application: **09.09.2015**
(21) Application number: 15155222.1
(22) Date of filing: 16.02.2015
(51) Int. Cl.: H02J 7/00

(54) **Rescue protection device for starter battery**

(30) Priority: 05.03.2014 TW 103203777
(71) Applicant: Reduce Carbon Energy Develop Co., Ltd., New Taipei City 23741 (TW)
(72) Inventor: Chen, Fu-Chieh, 23741 New Taipei City (TW)
(74) Representative: Brown, Michael Stanley

(57) **Abstract**

A rescue protection device for starter battery (52) of the vehicle, which includes rescue cables, and a controller (20) coupled to the rescue cables. The controller includes a control module (21), a relay (22), a pole connection detection module (23), a battery type diagnostic module (24), a recharge voltage detection module (25), and a prompt module (26). The control module is coupled to each of the aforementioned modules and the relay. Coordination operations of each of the above modules and the relay are managed according to directives, controls, and instructions to achieve the objectives of activating a rescue mechanism and protecting the rescue battery.

## Description

### BACKGROUND OF THE INVENTION

### (a) Field of the Invention

The present invention relates to a jumper for starter battery, and more specifically, apart from being provided with the basic function for a rescue battery to make a jumper connection with a starter battery, and thus enable smooth starting of a transport vehicle to be rescued, the rescue protection device for starter battery is also provided with the function to protect the rescue battery.

### (b) Description of the Prior Art

When battery power is not enough to start an engine, rescue cables can be used to enable the starter battery of the rescue engine to make a jumper connection with the starter battery of the engine to be rescued, and thus enable successful starting of the engine to be rescued. However, the rescue jumper cables must be correctly connected to the two positive and negative poles of the starter battery of the transport vehicle. If the poles are wrongly connected then it will cause damage to the starter battery or related circuits and parts of the transport vehicle.

Colors (black, red) are normally used to distinguish positive and negative poles of rescue cables and positive and negative poles of traditional starter batteries. However, under conditions of low light, or the cables and the battery are covered in dirt and grime, or because of an operator's lack of experience, all these are possible causes for the poles to be wrongly connected. And wrongly connecting the poles to the starter battery and related electrical parts will cause serious damage. In order to avoid wrongly connecting the poles, detection of wrongly connected poles of the rescue cables and circuit protection mechanisms are necessary to guarantee safety of the rescue battery and the transport vehicle to be rescued. In addition, ensuring the protection of the rescue battery during the rescue operation mechanism is also an important issue.

### SUMMARY OF THE INVENTION

The problems to be solved by the present invention include ensuring that the rescue mechanism is activated only under the conditions that the positive and negative poles of the rescue battery and the starter battery are correctly connected, and protecting the rescue battery during the rescue operation mechanism.

The rescue protection device for starter battery of the present invention comprises: rescue cables, and a controller coupled to the rescue cables, wherein the rescue cables comprise positive leads, negative leads, and positive connectors and negative connectors respectively coupled to the ends of the positive leads and the negative leads. The positive leads and the negative leads are coupled to the controller. The present invention is characterized in that:

The controller comprises a control module, a relay, a pole connection detection module, a battery type diagnostic module, a recharge voltage detection module, and a prompt module. The control module is coupled to each of the aforementioned modules and the relay. Coordination operations of each of the above modules and the relay are managed according to directives, controls, and instructions. The positive leads and the negative leads are coupled to the control module of the controller.

### Effectiveness of the present invention:

The pole connection detection module detects whether or not the positive connectors and the negative connectors are correctly connected to the positive and negative poles of the two batteries. If wrongly connected, then the control module instructs the relay to disconnect the electrical circuit between the rescue battery and the starter battery. If correctly connected, then the control module instructs the relay to establish an electrical circuit between the rescue battery and the starter battery, and thus enable the rescue mechanism to be activated.

The battery type diagnostic module matches the type that the rescue battery belongs to according to feedback voltage analysis of the rescue battery, and sets a safe voltage value according to the nominal maximum voltage of the battery type. After starting the transport vehicle to be rescued, the recharge voltage detection module detects the recharge voltage of the electric generator of the transport vehicle to be rescued and compares it to the safe voltage value. If the recharge voltage is higher than the safe voltage value then the relay disconnects the rescue battery from the starter battery to protect the rescue battery from being damaged by the excessively high recharge voltage.

To enable a further understanding of said objectives and the technological methods of the invention herein, a brief description of the drawings is provided below followed by a detailed description of the preferred embodiments.

### BRIEF DESCRIPTION OF THE DRAWINGS

Figure 1 shows a schematic view of the first embodiment of the present invention.
Figure 2 shows a module diagram of the first embodiment of the present invention.
Figure 3 is a schematic view of the first embodiment of the present invention connected to starter batteries of a rescue vehicle and vehicle to be rescued.
Figure 4 is a schematic view of the first embodiment of the present invention connected to an emergency rescue battery and a starter battery of a vehicle to be rescued.
Figure 5 is an operation flowchart of the first embodiment of the present invention.
Figure 6 is an exploded elevational view of the second embodiment of the present invention.
Figure 7 is an elevational view looking up from below at a controller of the second embodiment of the present invention.
Figure 8 is an exploded elevational view of the third embodiment of the present invention.

### DETAILED DESCRIPTION OF THE PREFERRED EMBODIMENTS

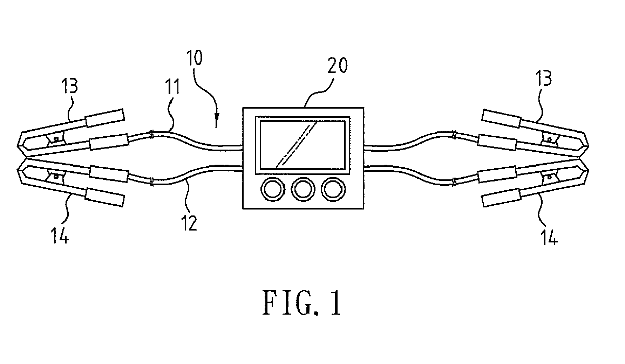

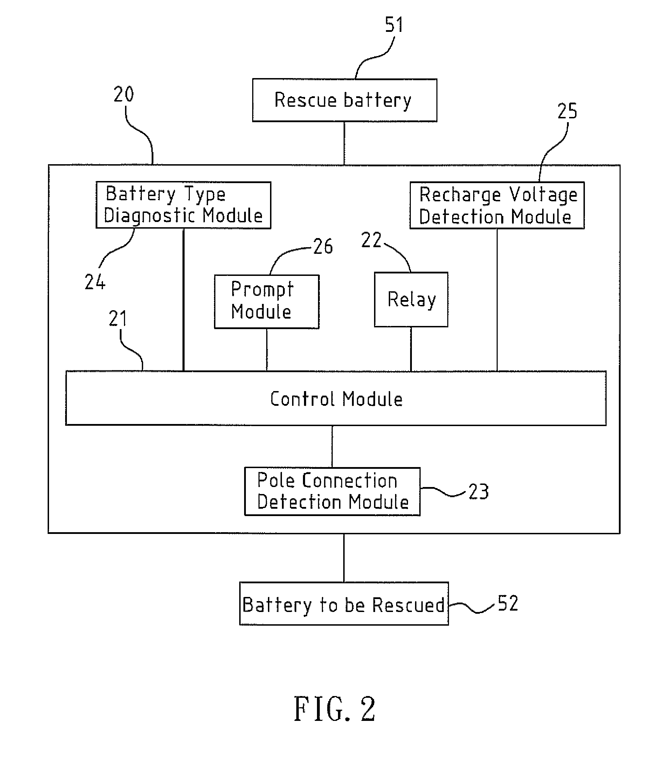

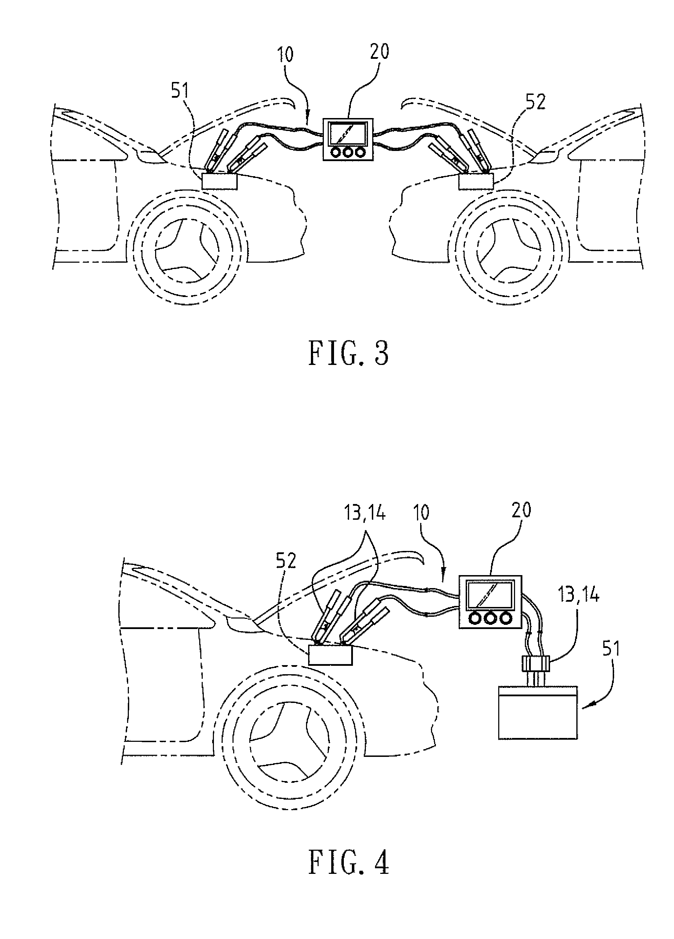

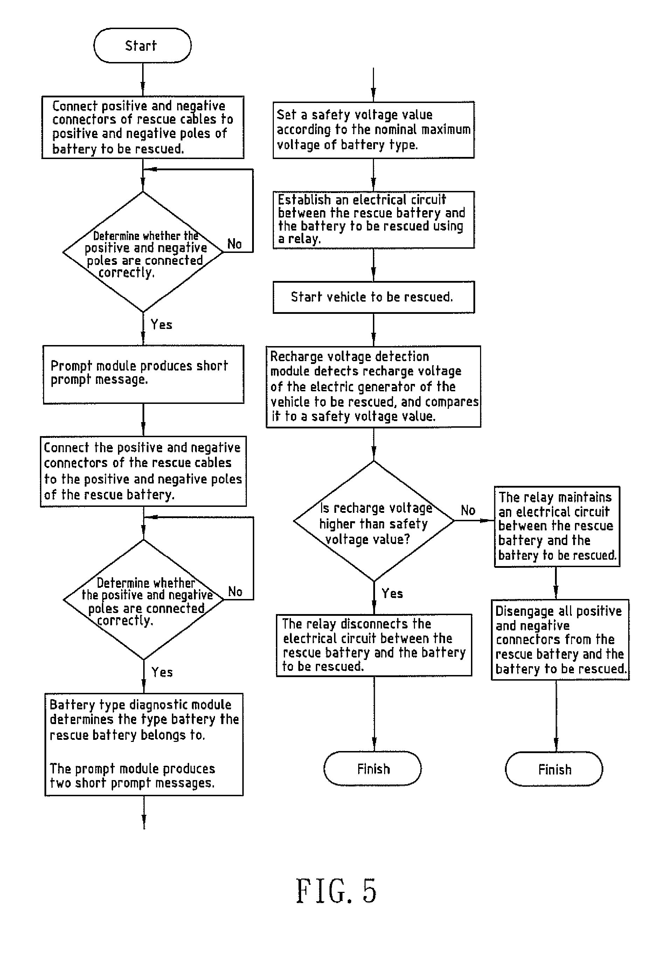

Referring to Figures 1 to 5, the first embodiment of the present invention primarily comprises rescue cables 10, and a controller 20 coupled to the rescue cables 10. Referring to Figure 2, the controller 20 comprises a control module 21, a relay 22, a pole connection detection module 23, a battery type diagnostic module 24, a recharge voltage detection module 25, and a prompt module 26. The control module 21 is coupled to the relay 22 and each of the aforementioned modules. Coordination operations of each of the modules and the relay 22 are managed according to directives, controls, and instructions.

The rescue cables 10 comprise positive leads 11, negative leads 12, and positive connectors 13 and negative connectors 14 respectively coupled to the two ends of the positive leads 11 and the negative leads 12. One set of the ends of the positive leads 11 and the negative leads 12 are respectively coupled to the control module 21 of the controller 20, and jumper connections are respectively made between the other ends of the positive and negative leads 11,12 and a rescue battery 51 and a starter battery 52 using the positive and negative connectors 13, 14. The so-called rescue battery 51 points to a starter battery of a rescue transport vehicle or a self-contained emergency rescue battery. The so-called starter battery 52 points to a starter battery of a vehicle to be rescued or another transport vehicle, (such as a ship, a motorcycle, or a flying vehicle).

One set of the positive and negative connectors 13, 14 among the rescue cables 10 connect to the starter battery 52. The pole connection detection module 23 detects whether or not the positive and negative connectors 13, 14 are correctly connected to the positive and negative poles of the starter battery 52. If correctly connected then the prompt module 26 produces a short prompt message (light or sound) indicating that the poles are correctly connected. If wrongly connected then the prompt module fails to actuate.

The other set of positive and negative connectors 13, 14 of the rescue cables 10 are connected to the rescue battery 51. The pole connection detection module 23 detects whether or not the positive and negative connectors 13, 14 are correctly connected to the positive and negative poles of the rescue battery 51. If correctly connected then the battery type diagnostic module 24 matches the type that the rescue battery 51 belongs to (such as lithium iron, lithium manganese, lead acid, and so on,) from feedback voltage analysis of the rescue battery 51, and sets a safe voltage value according to the nominal maximum voltage of the battery type. Furthermore, the relay 22 is activated and establishes an electrical circuit between the rescue battery 51 and the starter battery 52. Then the prompt module 26 produces two short prompt messages (light or sound) to indicate that the rescue mechanism is activated.

Under the condition that the relay 22 has established an electrical circuit between the rescue battery 51 and the starter battery 52, then the transport vehicle to be rescued is started. As the transport vehicle to be rescued is started, the recharge voltage detection module 25 detects the recharge voltage of the electric generator of the transport vehicle to be rescued and compares it to the safe voltage value. If the recharge voltage is less than or equal to the safe voltage value then it indicates that the recharge voltage is unlikely to produce a safety threat to the rescue battery 51 and the relay 22 maintains an electrical circuit between the rescue battery 51 and the starter battery 52. On the other hand, if the recharge voltage is higher than the safe voltage value then the relay 22 disconnects the rescue battery 51 and the starter battery 52 to protect the rescue battery 51 from being damaged by the excessively high recharge voltage.

After the relay 22 performs the disconnection then the controller 20 is completely shut down, and all the positive and negative connectors 13, 14 must be completely disengaged from the rescue battery 51 and the starter battery 52, only then can the controller 20 be restarted.

The second embodiment of the present invention is obtained by a variation in the first embodiment. The major differences between the second embodiment and the first embodiment lie in the rescue cables of the first embodiment being changed to first rescue cables and second rescue cables to form the structure of the second embodiment.

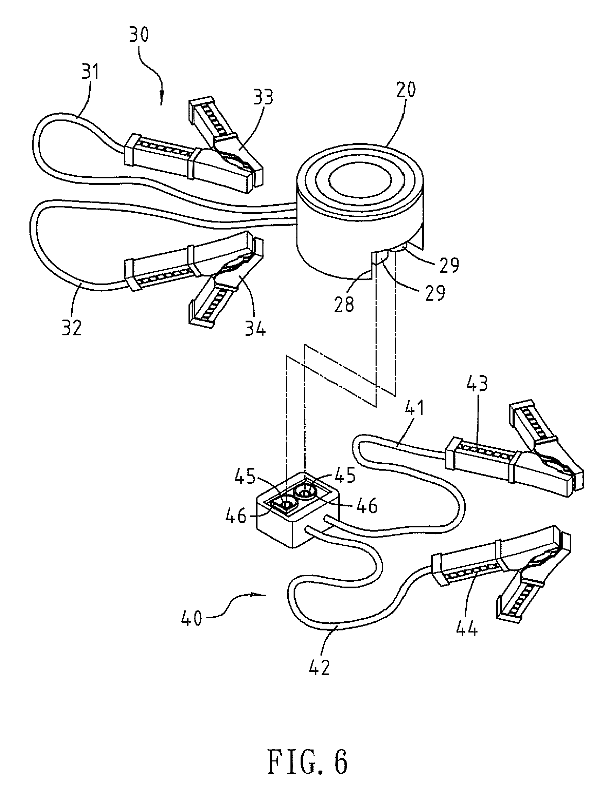

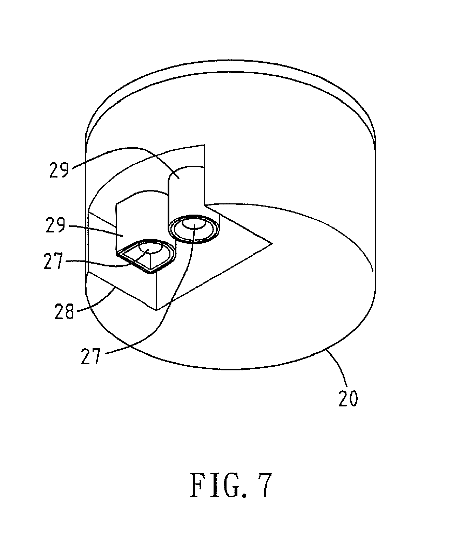

As shown in Figure 6 and Figure 7, the second embodiment comprises the controller 20, first rescue cables 30. and a set of second rescue cables 40. Wherein the first rescue cables 30 and the second rescue cables 40 are obtained from a variation in the rescue cables 10 (as shown in Figure 1). The controller 20 comprises a control module identical to that in the first embodiment, a relay, a correct connection of electrodes detection module, a battery type diagnostic module, a recharge voltage detection module, and a prompt module. The second embodiment has the same structure as the first embodiment, and thus the description thereof is not repeated herein.

The first rescue cables 30 comprise a first positive lead 31, a first negative lead 32, a first positive connector 33, and a first negative connector 34. Wherein ends of the first positive lead 31 and the first negative lead 32 are respectively coupled to a control module of the controller 20. The first positive connector 33 and the first negative connector 34 are coupled to the other ends of the first positive lead 31 and the first negative lead 32, respectively. Accordingly, the first positive and negative leads 31, 32 can be coupled to a starter battery of the vihecle using the first positive and negative connectors 33, 34.

The second rescue cables 40 comprise a second positive lead 41, a second negative lead 42, a second positive connector 43, and a second negative connector 44; wherein ends of the second positive lead 41 and the second negative lead 42 are coupled to a control module of the controller 20. The second positive connector 43 and the second negative connector 44 are coupled to the other ends of the second positive lead 41 and the second negative lead 42, respectively. Accordingly, the second positive and negative leads 41, 42 can be coupled to a rescue battery using the second positive and negative connectors 43, 44.

The controller 20 is mounted with a pair of two male terminals 27, which are coupled to a control module, and each of the male terminals 27 assumes a columnar shape. A recess 28 is formed at the bottom edge of the outer side of the controller 20, and each of the male terminals 27 is configured within the recess 28. Two tubular-shaped first protective jackets 29 is further formed around the periphery of each of the male terminals 27 of the controller 20. The first protective jackets 29 are used to protect each of the male terminals 27, and prevent the male terminals 27 from being impacted by an external force.

The set of second rescue cables 40 is mounted with a pair of two female terminals 45, and each of the female terminals 45 is respectively electrically connected to the second positive and negative leads 41, 42. Two tubular-shaped second protective jackets 46 is respectively formed around the periphery of each of the female terminals 45 of the set of second rescue cables 40. The second protective jackets 46 are used to protect each of the female terminals 45, and prevent the female terminals 45 from being impacted by an external force. Moreover, the external diameter of each of the second protective jackets 46 is slightly smaller than the internal diameter of each of the first protective jackets 29. Accordingly, each of the male terminals 27 is able to respectively pair up and axially insert into each of the respective female terminals 45, thus enabling the set of second rescue cables 40 to be coupled to the controller 20. Furthermore, each of the female terminals 45 is used to flexibly grip the male terminals 27, which improves dependability of the corresponding connection between each of the male terminals 27 and each of the female terminals 45.

When using the second embodiment, the first positive connector 33 and the first negative connector 34 of the first rescue cables 30 are respectively connected to the positive and negative poles of the starter battery, whereupon the controller 20 detects whether or not the first positive connector 33 and the first negative connector 34 are correctly connected to the positive and negative poles of the starter battery, and, according to the detection results, produces a prompt message (light or sound) or nothing happens.

Each of the female terminals 45 of the set of second rescue cables 40 and each of the male terminals 27 of the controller 20 enable the set of second rescue cables 40 to be coupled to the controller 20. Moreover, the second positive connector 43 and the second negative connector 44 of the set of second rescue cables 40 are respectively connected to the positive and negative poles of the rescue battery, whereupon the controller 20 detects whether or not the second positive connector 43 and the second negative connector 44 are correctly connected to the positive and negative poles of the rescue battery, and, according to the detection results, each of the follow-up operations described for the first embodiment are carried out in identical fashion. Such an operational procedure completes the rescue operation of starting up a vehicle to be rescued, and also protects the rescue battery from being damage due to an excessively high recharge voltage.

The third embodiment of the present invention is obtained by a variation in the second embodiment. The major differences between the third embodiment and the second embodiment lie in removing the second rescue cables 40 of the second embodiment, and electrically connecting a controller to a rescue battery to form the structure of the third embodiment.

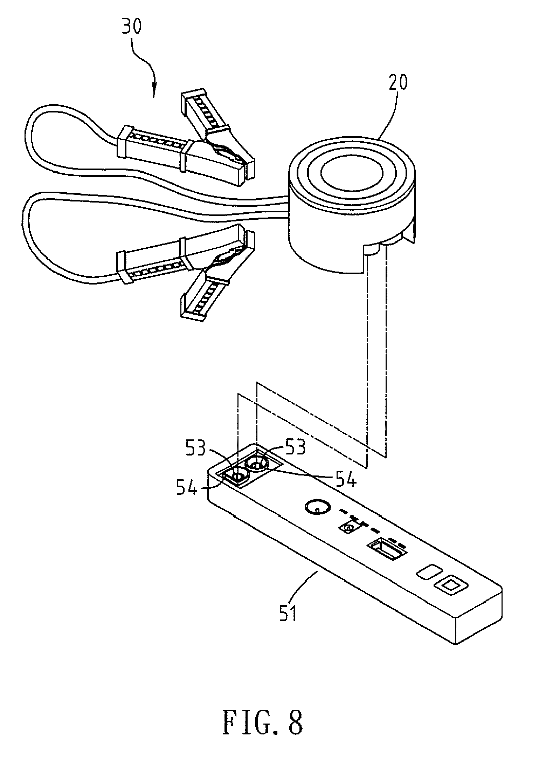

As depicted in Fig. 8, the third embodiment comprises the controller 20, the first rescue cables 30, and a rescue battery 51; wherein the controller 20 and the specific structure of the first rescue cables 30 are identical to those in the second embodiment, and thus the description thereof is not repeated herein.

The rescue battery 51 is mounted with a pair of two female terminals 53, and a tubular second protective jackets 54 is respectively formed on the periphery of each of the female terminals 53 of the rescue battery 51, thereby enabling the two male terminals 27 of the controller 20 to respectively pair up and axially insert into each of the respective female terminals 53, thus enabling the rescue battery 51 to be coupled to the controller 20. The specific structures of the female terminals 53 and the second protective jackets 54 are respectively identical to the female terminals 45 and the second protective jackets 46 of the second embodiment (as shown in Figure 6).

It is of course to be understood that the embodiments described herein are merely illustrative of the principles of the invention and that a wide variety of modifications thereto may be effected by persons skilled in the art without departing from the spirit and scope of the invention as set forth in the following claims.

## Claims

1. A rescue protection device for starter battery, comprising:
rescue cables, and a controller coupled to the rescue cables; wherein the rescue cables comprise positive leads, negative leads, and positive connectors and negative connectors respectively coupled to ends of the positive leads and the negative leads; the positive leads and the negative leads are coupled to a controller;
and is **characterized in that**:
the controller comprises a control module, a relay, a pole connection detection module, a battery type diagnostic module, a recharge voltage detection module, and a prompt module; the control module is coupled to each of the modules and the relay; coordination operations of each of the modules and the relay are managed according to directives, controls, and instructions;
the positive leads and the negative leads are coupled to the control module of the controller;
one set of the positive and negative connectors among the rescue cables are connected to the starter battery of the vihecle; the pole connection detection module detects whether or not the positive connector and the negative connector are correctly connected to the positive and negative poles of the starter battery; if correctly connected then the prompt module produces a short prompt message, indicating that the poles are correctly connected; if wrongly connected then the prompt module fails to actuate;
the other set of positive and negative connectors of the rescue cables are connected to the rescue battery; the pole connection detection module detects whether or not the positive and negative connectors are correctly connected to the positive and negative poles of the rescue battery; if correctly connected then the battery type diagnostic module determines the type that the rescue battery belongs to, a nominal maximum voltage of that type of battery is set as the safety voltage value, and an electrical circuit is established between with the rescue battery and the starter battery, then the prompt module produces two short prompt messages to indicate that the rescue mechanism is activated;
because the relay establishes an electrical circuit between the rescue battery and the starter battery, thus, the vehicle to be rescued connected with the starter battery can be started, the recharge voltage detection module then detects the recharge voltage of the electric generator of the transport vehicle to be rescued and compares it to the safe voltage value;
if the recharge voltage is higher than the safe voltage value then the relay disconnects the electrical circuit between the rescue battery and the starter battery to protect the rescue battery.

2. The rescue protection device for starter battery according to claim 1, wherein the rescue battery is an emergency rescue battery.

3. The rescue protection device for starter battery according to claim 1, wherein the rescue battery is a starter battery of a rescue transport vehicle.
